# EUROPÄISCHE PATENTSCHRIFT

(11) **EP 3 783 322 B1**
(45) Veröffentlichungstag und Bekanntmachung des Hinweises auf die Patenterteilung: **02.03.2022**
(21) Anmeldenummer: 20191955.2
(22) Anmeldetag: 20.08.2020
(51) Int. Cl.: G01G 21/22, G01G 23/36, G01G 19/44, G01G 19/50

(54) **WAAGE**
SCALE
BALANCE

(30) Priorität: 22.08.2019 DE 102019122622
(43) Veröffentlichungstag der Anmeldung: 24.02.2021
(73) Patentinhaber: Leifheit AG, 56377 Nassau (DE)
(72) Erfinder: EMTER, Artjom, 56077 Koblenz (DE); BOSSCHER, Eric, 56379 Obernhof (DE)
(74) Vertreter: btb IP Bungartz Baltzer Partnerschaft mbB Patentanwälte

(56) Entgegenhaltungen:
- CN-U- 204 924 422
- DE-A1-102010 038 581
- DE-U1-202009 012 748

## Beschreibung

Die Erfindung betrifft eine Waage nach dem Oberbegriff des Anspruchs 1. Insbesondere betrifft die Erfindung eine Waage für den Haushalts- und/oder persönlichen Gebrauch, die beispielsweise als akku- oder batteriebetriebene Küchenwaage, Personenwaage oder Briefwaage ausgebildet sein kann.

Die gattungsgemäßen Waagen weisen eine Tragplatte zur Aufnahme einer zu wiegenden Last auf, die sich über Wägezellen mittelbar oder unmittelbar auf einem Untergrund abstützt. Mittelbar kann bedeuten, dass die Waage unterhalb der Tragplatte ein mit der Tragplatte fest verbundenes Gehäuse aufweisen kann, das sich dann seinerseits über die Wägezellen auf dem Untergrund abstützt. Natürlich können sich auch die Wägezellen wiederum mittelbar auf dem Untergrund abstützen, für die Vorteile und Anwendung der vorliegenden Erfindung ist dies unbeachtlich.

Die Waage weist weiterhin eine Elektronik zur Ermittlung des Gewichts der auf der Tragplatte liegenden Last als Wiegeergebnis, eine Energieversorgung und eine mit der Elektronik zusammenwirkende Anzeigevorrichtung zur Anzeige wenigstens des Wiegeergebnisses auf. Die Anzeigevorrichtung ist dabei unterhalb der Oberseite der Tragplatte, also innerhalb der Tragplatte oder unter der Tragplatte, derart angeordnet, dass das Wiegeergebnis durch diese Oberseite der Tragplatte von oben sichtbar ist.

Aus der DE 20 2009 012 748 U1 ist eine Waage mit einem das zu wiegende Gewicht aufnehmenden, lichtdurchlässigen Gehäuse bekannt, in dem eine großflächige LED-Anzeige zur Anzeige des Wiegeergebnisses durch den oberen Gehäuseteil hindurch vorgesehen ist. Die Waage kann einen transluzenten Überzug oder eine Abdeckung in Form eines Bodenbelag- oder Textilelement aufweisen. Diese Waage weist zwar ein großes, durch die Tragplatte sichtbares Display auf, ist aber hinsichtlich der Gestaltung des Gehäuses und der Tragplatte eingeschränkt.

Eine weitere Waage der eingangs genannten Art ist aus der DE 10 2005 039 953 A1 bekannt. Diese Waage weist ein Display als Anzeigevorrichtung für die Anzeige eines Messwertes auf, das eine dunkel eingefärbte Scheibe besitzt, hinter der aktivierbare Leuchtelemente angeordnet sind, die im Falle der Aktivierung so stark leuchten, dass von den Leuchtelementen ausgehendes Licht durch die Scheibe hindurch mit bloßem Auge wahrnehmbar ist. Die Scheibe ist dabei auch gleichzeitig die Tragplatte, auf die das zu wiegende Objekt auflegbar oder aufstellbar ist.

Derartige Tragplatten werden, damit die Anzeigevorrichtung im inaktiven Zustand weitgehend unsichtbar bleibt, bedruckt, wobei die Pixel im Druckvorgang so gesetzt werden, dass sich einerseits der Eindruck einer vollflächigen Bedruckung ergibt, andererseits aber der Abstand der einzelnen Pixel ausreichend groß ist, um bei aktivierter Anzeigevorrichtung den angezeigten Wert durch die Beschichtung hindurch infolge der beim Bedrucken freigebliebenen Bereiche erkennen zu können.

Diese bekannten Waagen haben dabei den Nachteil, dass die Tragplatte auch gleich-zeitig die Anzeigevorrichtung ist, so dass im Wesentlichen nur eine gläserne Tragplatte in Betracht kommt. Ferner kann der gewünschte Effekt nur durch das Bedrucken erzielt werden, was die Gestaltungsfreiheit einschränkt. Die gleichen Nachteile würde auch eine Waage aufweisen, die eine separate Tragplatte verwendet, unter der die Anzeigevorrichtung angeordnet ist. Auch hier müsste eine Teilbedruckung Bereiche freilassen, durch die das Licht der Anzeigevorrichtung hindurchtreten kann.

Aus der DE 10 2006 026 281 B3 wiederum ist eine Waage mit einer transluzenten Tragplatte bekannt, die eine innerhalb oder außerhalb der Tragplatte verdeckt angeordnete Lichtquelle aufweist, die das Licht in die Plattenebene einkoppelt. Die Licht-strahlen treten dann an den Begrenzungen der Tragplatte als optischer Hinweis auf die Tragplattengrenzen auf. Dies lässt sich im Wesentlichen nur mit Glasplatten als Tragplatte realisieren und stellt zwar eine vorteilhafte Lösung dar, allerdings besteht bezüglich der Gestaltungsfreiheit der Waage weiterer Bedarf, die Tragplatte in eine andere Richtung optisch attraktiv auszugestalten. Ferner kann durch diese Lösung die Anzeigevorrichtung nicht verdeckt ausgebildet werden.

Aus der 10 2010 038 581 A1 ist eine Waage bekannt, die in der Tragplatte Aufnahmen für LEDs einer Matrixanzeige aufweist, wobei oberhalb der LEDs jeweils Simili angeordnet sind, um die Anzeigepunkte glänzender erscheinen zu lassen. Auf der Tragplatte kann eine Glasplatte als zusätzliche Deckschicht angeordnet sein, wobei sich dann die Simili ebenfalls in der Aufnahme befinden. Auch wenn diese Waage eine attraktive Ausgestaltung der Anzeige bietet, besteht ein Bedürfnis nach einer anderen, ebenfalls attraktiven Art der Tragplatte, um einem anderen Kundengeschmack gerecht werden zu können. Aus der CN204924422U ist eine weitere Waage mit einer LED Anzeige bekannt.

Aufgabe der Erfindung ist es daher, eine Waage zu schaffen, die bei möglichst geringen Herstellungskosten eine größere Materialvielfalt zur Herstellung der Tragplatte mit im inaktiven Betrieb kaum oder möglichst unsichtbarer Anzeigevorrichtung ermöglicht. Insbesondere soll bei einem weiteren Aspekt der Erfindung die Oberseite der Waage möglichst aus einer ungestörten, für den Betrachter natürlich, schön und wertig anmutenden Fläche bestehen.

Diese Aufgabe wird erfindungsgemäß durch eine Waage nach Anspruch 1 gelöst.

Die neue Waage ist insbesondere dadurch gekennzeichnet, dass die Tragplatte von einem Trägerkörper und einer darauf angeordneten Deckschicht gebildet ist, wobei die Deckschicht wenigstens in dem Bereich, unter dem die Anzeigevorrichtung angeordnet ist, vorgesehen ist. Die Anzeigevorrichtung weist eine Leuchtstärke und die Deckschicht weist eine Transluzenz auf, die derart aufeinander abgestimmt sind, dass die Anzeigevorrichtung durch die Deckschicht sichtbar ist und das Wiegeergebnis erkennbar ist.

Hierzu ist die Anzeige als Matrixanzeige ausgebildet. Eine Matrixanzeige in diesem Sinne ist eine Anzeige, die die einzelnen Ziffern und gegebenenfalls auch Buchstaben durch einzelne Lichtpunkte gepixelt darstellt. Das heißt, dass einzelne Lichtpunkte erzeugt werden, die dann die Ziffern bzw. den Buchstaben darstellen. Während dies im Falle eines Displays über den Bildschirm erfolgt, verwendet die vorliegende Erfindung hierzu einzelne Lichtquellen in Form von Leuchtdioden (LEDs). Dies ist auch schon bei der oben genannten Waage nach der DE 20 2009 012 748 U1 der Fall. Neu ist allerdings nach einem Aspekt der Erfindung, dass die LEDs nicht mehr innerhalb eines Gehäuses der Waage, sondern in der Tragplatte selbst verdeckt angeordnet sind.

Zur Aufnahme der LEDs ist die Tragplatte vorteilhaft zwei oder mehrschichtig ausgebildet. Zum einen besteht sie aus der Deckschicht und dem Trägerkörper. Die Deckschicht kann sich über die gesamte Oberfläche des Trägerkörpers erstrecken oder auch nur einen Teil des Trägerkörpers abdecken. Bei den meisten Ausgestaltungen wird jedoch eine vollflächige Abdeckung der Oberseite des Trägerkörpers bevorzugt sein. Alternativ kann die Tragplatte auch einstückig ausgebildet sein, wobei in diesem Fall die LED-Aufnahmen als Bohrung von unten ausgebildet sind, die bis kurz vor die obere Oberfläche des Trägerkörpers reichen.

Durch die erfindungsgemäße Ausgestaltung der Waage kann nun eine viel größere Materialvielfalt für die Herstellung der Tragplatte, insbesondere der Deckschicht der Tragplatte, in Betracht gezogen werden. Während bisher bei verdeckten Displays, die nur im aktiven Zustand sichtbar sind, die Tragplatte aus Glas oder einem vergleichbaren Material beschaffen sein musste oder ein Display unter einer durchsichtigen Tragplatte angeordnet werden musste, können nun weitere Materialien in Betracht gezogen werden. Ferner kann bei pixelartig durchleuchteter Tragplatte, wie es die DE 20 2009 012 748 U1 zeigt, auf ein unteres Gehäuse weitgehend verzichtet werden.

Insbesondere vor dem Hintergrund, dass die gattungsgemäßen Waagen üblicherweise eher wenig Informationen übermitteln müssen, reicht es aus, dass die Anzeigevorrichtung nur einzelne Lichtpunkte (Pixel) anzuzeigen vermag, aus denen sich Zahlen und/oder Buchstaben über die Matrixanzeige zusammensetzen lassen.

Die wiederzugebene Information wird wie bei der Lösung nach der DE 20 2009 012 748 U1 in einzelne, zu erhellende Lichtpunkte aufgeteilt, die mit entsprechender Helligkeit durch die LEDs hinter der Deckschicht dargestellt werden. Diese Lichtpunkte sind aufgrund der Abstimmung der Dicke der Deckschicht auf die Leuchtstärke der LEDs auch dann sichtbar, wenn die Deckschicht eine durchgängige Schicht ist, so dass die im Stand der Technik nach der DE 10 2005 039 953 A1 notwenige Teilbedruckung mit einzelnen Pixeln, die mit entsprechendem Abstand zueinander gedruckt sind, nunmehr nicht mehr notwendig ist.

Die Tragplatte besteht wegen der günstigen Fertigungsmöglichkeit bevorzugt aus wenigstens zwei, übereinander angeordneten Schichten, wobei die Anzeigevorrichtung in der unteren Schicht angeordnet ist. Die Aufnahmebereiche für die LEDs der Matrixanzeige sind in Bohrungen oder sonstigen Einsenkungen bzw. Durchgangsöffnungen in der unteren Schicht, die von dem Trägerkörper gebildet ist, vorgesehen. Die obere Schicht bildet dabei die Deckschicht, die zum Beispiel in Form einer Folie oder eines dünnen Furniers vorliegen kann. Letztlich eignen sich hierfür alle, bei entsprechend geringer Dicke transluzenten Materialen.

Erfindungsgemäß besteht der Trägerkörper und die Deckschicht der Tragplatte aus dem gleichen Holz, wie beispielsweise Bambus. Die Anzeigevorrichtung kann dann in einer unteren, aus Holz bestehenden Teilplatte der Tragplatte integriert sein, die auf ihrer Unterseite die Wägezellen aufweist. Beispielsweise aus dem gleichen Holz wird eine dünne Schicht auf die Oberseite der unteren Teilplatte furniert. Nach dem Furnieren sieht der Benutzer bei inaktiver Anzeigevorrichtung dann ausschließlich eine Holzplatte, die den Eindruck eines massiven Blocks aufweist und sich über Wägezellen auf dem Boden abstützt. Diese Ausgestaltung ist besonders günstig, da handelsübliche Furniere kostengünstig erhältlich sind und üblicherweise die notwendige Dicke aufweisen, so dass zum einen die Öffnungen der Anzeigevorrichtung hinreichend abgedeckt sind, zum anderen diese Öffnungen aber im inaktiven Zustand nicht sichtbar sind. Alternativ kann auf die Deckschicht auch verzichtet werden, wenn die LED-Aufnahmen als von unten nach oben in den Trägerkörper eingebrachte Sacklöcher ausgebildet sind, die sich fast bis zur Oberfläche des Trägerkörpers erstrecken. Auch hier bleibt dann eine dünne Materialschicht stehen, die von den LEDs durchleuchtet werden kann. Nachfolgend wird die Erfindung anhand eines zwei- oder mehrschichtigen Aufbaus der Tragplatte mit einer ein- oder mehrlagigen oberen Deckschicht und zumindest einem ein- oder mehrschichtigen Trägerkörper beschrieben. Selbstverständlich können auch unterschiedliche Materialien verwendet werden bzw. der Trägerkörper kann mit einer seitlichen Beschichtung versehen sein, so dass sich trotz der unterschiedlichen Materialien der Eindruck eines einheitlichen Holzbrettes als Tragplatte ergibt.

Die LEDs sind in LED-Aufnahmen untergebracht, die in die Tragplatte eingeformt sind und derart angeordnet sind, dass sich die gepixelten Ziffern und gegebenenfalls Buchstaben durch selektives Aktivieren der LEDs über die Elektronik anzeigen lassen. Die LED-Aufnahmen sind bevorzugt im Trägerkörper vorgesehen. Sie können zum Beispiel als Einsenkung der Oberseite des Trägerkörpers ausgebildet sein. In diesem Fall kann die Verkabelung der LEDs durch in die Oberseite des Trägerkörpers eingeprägte Kabelrinnen, die dann ebenfalls durch die Deckschicht nivelliert und abgedeckt werden, realisiert werden. An geeigneten Stellen können Durchgangsbohrungen vorgesehen sein, durch die eine Verkabelung zur Elektronik, die bevorzugt in einer im Trägerkörper vorgesehenen Elektronikaufnahme angeordnet ist, geführt werden kann.

Alternativ können die LED-Aufnahmen auch Durchgangsöffnungen sein, so dass sie von der Unterseite des Trägerkörpers aus von unten kontaktiert werden können. Da LEDs nicht nur einen geringen Stromverbrauch aufweisen, sondern auch eine geringe Wärme entwickeln, können die LED-Aufnahmen klein gehalten werden, so dass sie auch mit einer recht dünnen Deckschicht abgedeckt werden können, ohne dass die Gefahr besteht, dass der Benutzer durch Auflegen von scharfkantigen oder spitzen Wiegegütern als Last die Deckschicht im Bereich der LED-Aufnahmen durchsticht oder beschädigt. Die Verwendung von Durchgangsöffnungen oder entlüftenden Kabelkanälen in der Oberseite des Trägerkörpers hat zusätzlich den Vorteil, dass ein infolge einer Temperaturerhöhung durch die LEDs oder durch Schwankungen der Raumtemperaturen entstehender Überdruck in der LED-Aufnahme ausgeglichen werden kann und ein Auswölben der Deckschicht oberhalb der LED-Aufnahme vermieden werden kann. Dies ist natürlich nicht notwendig wenn die Deckschicht hinreichend formstabil ist um die üblicherweise bei Temperaturschwankungen im Innenraum einer Wohnung auftretenden Druckänderungen aushalten zu können.

Natürlich sollte der Trägerkörper mit den LED-Aufnahmen für die Anzeigevorrichtung so beschaffen sein, dass die Tragplatte in diesem Bereich die notwendige Stabilität aufweist. Dies gilt insbesondere bei einer bevorzugten Ausgestaltung der Erfindung, bei der zusätzlich zu den LED-Aufnahmen im Trägerkörper auch noch eine Elektronikaufnahme in Form einer Aufnahmetasche vorgesehen ist. Diese Ausgestaltung erlaubt es, mit Ausnahme der nach unten hervorspringenden Wägezellen alle funktionalen Bauteile in den Trägerkörper zu integrieren. Somit hat der Benutzer den Eindruck einer ebenen, massiven Platte mit darunter angeordneten Wägezellen. Die Elektronikaufnahme kann dabei über einen Deckel oder eine untere Deckschicht verschlossen sein. Ferner ist natürlich möglich, dass die Elektronikaufnahme von einer seitlich oder von unten in den Trägerkörper einschiebbaren, schubladenartigen Aufnahme gebildet ist. Gleiches gilt für ein eventuelles Batteriefach, wenn dieses nicht in die Elektronikaufnahme integriert ist.

Bei einer besonders günstigen Ausgestaltung der Erfindung lässt sich die oben beschriebene Ausgestaltung dadurch realisieren, dass die LED-Aufnahmen von einer Mehrzahl von Bohrungen gebildet sind, die sich durch den Trägerkörper, also den unteren Teil der Tragplatte erstrecken. Sofern die Tragplatte aus einem Stück gefertigt ist, sind diese Bohrungen dann zum Beispiel als Sackloch ausgebildet, so dass sich zwischen den Enden dieser Sacklöcher und der Oberseite der Tragplatte eine Deckschicht mit einer geringen Wandstärke, die in etwa mit der Dicke des oben beschriebenen Furniers vergleichbar ist, ergibt.

In die LED-Aufnahmen sind LEDs als vergleichsweise helle Lichtquellen eingesetzt, deren Leuchtstärke so groß ist, dass sie auch bei Tageslicht durch die Deckschicht hindurch gut erkennbar sind und die über die Elektronik, die zum Beispiel wie oben beschrieben in einem unteren Teil des Trägerkörpers in der Elektronikaufnahme angeordnet ist, angesteuert werden können. Auf diese Weise lassen sich die einzelnen Lichtpunkte erzeugen, die dann zusammengesetzt den Gewichtswert als Anzeige für den Benutzer anzeigen.

Durch Verwendung von Linsen kann das von den LEDs abgegebene Licht zusätzlich gebündelt werden. Diese Linsen können in die LED-Aufnahmen eingesetzt sein. Eine besonders einfache und vorteilhafte Ausgestaltung einer solchen Lösung besteht in der Verwendung einer transparenten Kunststofffolie, in die die Linsen eingeprägt sind. Eine solche Kunststofflinse kann einfach durch Kalandrieren der Kunststofffolie hergestellt werden, wobei diesem Prozess linsenartige Vertiefungen bzw. Erhebungen in die Folie eingeprägt werden. Diese Folie kann dann auf den Trägerkörper aufgeklebt werden, so dass die Linsen oberhalb der LED-Aufnahmen vorgesehen sind. Anschließend wird dann die obere Deckschicht ebenfalls aufgebracht. Das von den LEDs abgegebene Licht wird dann kurz hinter den Linsen in der Ebene der oberen Deckschicht fokussiert.

Eine weitere vorteilhafte Ausgestaltung der Erfindung nutzt die Möglichkeit, dass LEDs üblicherweise unterschiedliche Farben abstrahlen können. Die Farbe wiederum kann durch die Elektronik der Waage gesteuert werden. So ist es beispielsweise möglich, dass Grenzwerte in der Waage hinterlegt werden, deren Über- oder Unterschreiten eine Reaktion der Elektronik hervorruft, die infolge des Überschreitens oder das Unterschreitens des Grenzwertes die Farbe der LEDs ändert. Hat beispielsweise im Falle einer Personenwaage der Benutzer sein Idealgewicht oder eine sonstige Gewichtsgrenze eingegeben, kann die Elektronik selbsttätig bei Überschreiten dieser Grenze das Gewicht in "rot" darstellen. Liegt das Gewicht unterhalb dieser Grenze, kann die Anzeige in "grün" oder "weiß" erfolgen.

Auch bei einer Küchenwaage kann die Farbvariation der LEDs genutzt werden, entweder durch manuelles Eingeben des Wunschgewichtes mit entsprechender Reaktion der Elektronik wie oben beschrieben oder beispielsweise durch ein selbsttätiges Einlesen eines Rezeptes. In diesem Fall kann der Benutzer dann zum Beispiel beim Abwiegen so lange die auf der Tragplatte befindliche Schale befüllen, bis die Anzeige von beispielsweise von "rot" auf "grün" umspringt. Füllt er eine zu große Menge des Produkts in die Schale ein, kann die Anzeige dann wieder auf "rot" zurückspringen.

Bei einer sehr leicht herstellbaren Variante der Erfindung sind die LEDs auf einer Platine angeordnet. Diese kann dann von unten an der Unterseite des Trägerkörpers angebracht sein, so dass sich die LEDs ausgehend von der Platine nach oben in die darüber liegenden LED-Aufnahmen erstrecken. Auf diese Weise kann die Platine zusammen mit den LEDs im Rahmen einer Elektronikfertigung vorgefertigt werden und nachfolgend bei der Montage der Waage leicht von unten an die Tragplatte eingesetzt werden. Übliche Zentrierhilfen können dabei das Einfädeln der LEDs in die LED-Aufnahmen erleichtern. Bevorzugt ist natürlich diese Platine auch gleichzeitig die Platine, die die Elektronik der Waage beinhaltet. In diesem Fall ist dann eine Elektronikaufnahme zur Aufnahme der Elektronik der Waage unterhalb des Bereichs angeordnet, der als Anzeige dienen soll und die LED-Aufnahmen enthält.

Die Elektronikaufnahme kann beispielsweise eine quaderförmige Ausnehmung sein. Sie kann von unten über einen Deckel verschlossen sein und gleichzeitig auch Aufnahmefach für die Batterien oder einen Akku sein. Alternativ kann die Platine auch auf der Oberseite eines Klotzes angeordnet sein, der aus dem gleichen Material besteht wie der Trägerkörper und idealerweise auch die obere Deckschicht. Dieser Klotz ist dann bevorzugt so dimensioniert, dass er unter Belassung eines leichten Spiels in die Elektronikaufnahme selbstzentrierend einschiebbar ist und diese damit gleichzeitig ausfüllt und nach unten abschließt. Zusätzlich ist auch für die exakte Montage über die Führung der Platine die Führung des Klotzes sichergestellt, so dass ein "Treffen" der LEDs mit der LED-Aufnahme ohne Risiko einer Beschädigung der LEDs erleichtert bzw. sichergestellt wird.

Die LED-Aufnahmen können ferner zur Vermeidung der Präsenz von Luft zwischen den LEDs und der obere Deckschicht gefüllt werden. Hier bietet sich ein transparentes Material an, das insbesondere nach Einsetzen der LEDs von oben in die in diesem Fall oben offenen LED-Aufnahmen im Trägerkörper eingefüllt wird. Ein solches Material kann beispielsweise ein transparenter Kunststoff, insbesondere ein Kunstharz sein. Das Verfüllen der LED-Aufnahmen vermeidet einen schwankenden, temperaturabhängigen Gasdruck in den LED-Aufnahmen, wenn ein Druckausgleich nach unten oder seitlich nicht möglich sein sollte. Hierdurch werden Auswölbungen der oberen Deckschicht oder ein Einsaugen der oberen Deckschicht in die LED-Aufnahmen in Folge von Druckschwankungen vermieden. Gleichzeitig kann natürlich die obere Deckschicht auch im Bereich der LED-Aufnahmen vollflächig mit dem Trägerkörper verklebt werden, so dass eine Beschädigung der oberen Deckschicht im Bereich der LEDs zusätzlich vermieden werden kann.

Die oben beschriebene Waage hat nicht nur den Vorteil, dass sie die Möglichkeit eines besonders attraktiven Designs bietet, sondern ermöglicht auch die Tatsache, dass sie, wie die gattungsgemäßen Waagen, trotz der Verwendung anderer Materialien eine durchgängige, wasserdichte Oberfläche ohne Vertiefungen oder Spalten bietet, die während der Benutzungsdauer verunreinigt werden könnten. Weitere Merkmale und Vorteile der Erfindung ergeben sich aus der nachfolgenden Beschreibung bevorzugter Ausführungsbeispiele anhand der Zeichnungen. In den Zeichnungen zeigt:
Fig. 1 eine erfindungsgemäße Waage in dreidimensionaler Ansicht,
Fig. 2 die Tragplatte einer erfindungsgemäßen Waage im Schnitt und
Fig. 3 die Tragplatte einer weiteren Ausgestaltung einer erfindungsgemäßen Waage im Schnitt.

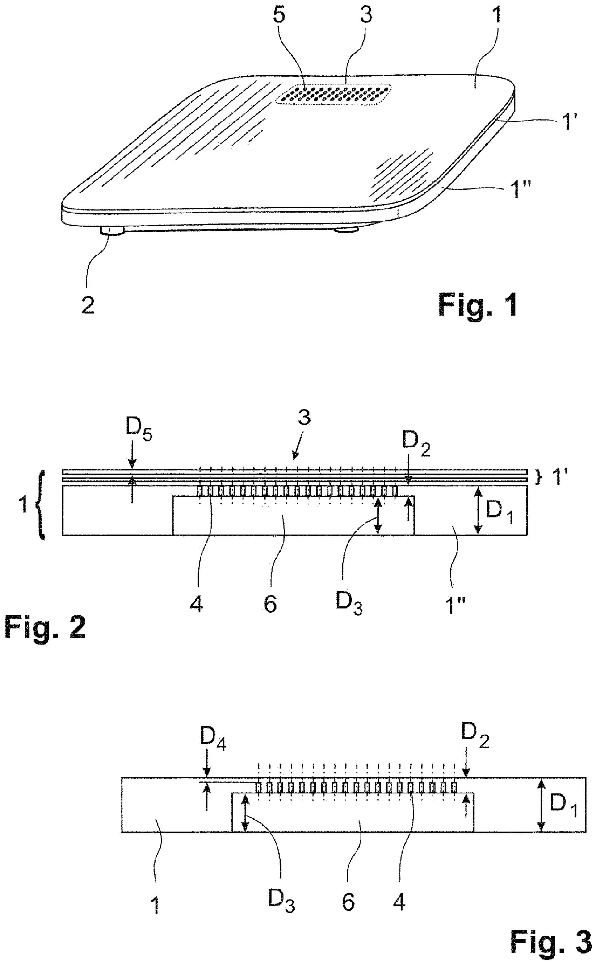

In Figur 1 ist eine erfindungsgemäße Waage mit einer Tragplatte 1 und einer Anzeigevorrichtung abgebildet, wobei sich die Tragplatte 1 über vier Wägezellen 2 (sichtbar sind hier nur zwei vordere Wägezellen 2) auf dem Untergrund abstützt. Die Anzeigevorrichtung ist als Matrixanzeige 3 ausgebildet, die den anzuzeigenden Wert über einzelne Bildpunkte (Pixel) wiedergibt. Die Tragplatte 1 besteht hier aus einem unteren Trägerkörper 1" und einer darauf angeordneten, den unteren Trägerkörper 1" vollständig abdeckenden oberen Deckschicht 1'. Die obere Deckschicht 1' ist dünn ausgebildet und weist beispielsweise eine Dicke von weniger als 3 mm, bevorzugt weniger als 1 mm und besonders bevorzugt von maximal 0,5 mm auf. Sie kann beispielsweise von einem handelsüblichen Holzfurnier gebildet sein.

Die Matrixanzeige 3 ist im hinteren Bereich der Tragplatte 1 vorgesehen und stellt den gemessenen Gewichtswert, den eine hier nicht sichtbare Elektronik aus dem Messsignal der Wägezellen 2 errechnet hat, über eine Pixel-Darstellung dar. Hierzu sind Lichtpunkte 5 einzelner LEDs unterhalb der Oberseite der Tragplatte 1 vorgesehen, die zum Anzeigen des Gewichtswertes selektiv von der Elektronik angesteuert, das heißt aktiviert werden können.

Die einzelnen LEDs sind in LED-Aufnahmen 4 integriert, die in den Trägerkörper 1" der Tragplatte 1 eingebracht sind. Im gezeigten Ausführungsbeispiel ist für jede LED eine bohrungsähnliche, zylindrische LED-Aufnahme 4 vorgesehen. Alternativ kann die LED natürlich auch unterhalb der Bohrungen vorgesehen sein und in den Bohrungskanal hineinleuchten. Grundsätzlich wird es aber gewünscht sein, wenn zwischen der LED und der oberen Deckschicht 1′ ein möglichst geringer Luftraum vorgesehen ist, damit sich aufgrund von Temperaturschwankungen keine die Oberfläche der oberen Deckschicht 1′ beeinträchtigenden Druckschwankungen ergeben können. Hierzu kann die LED-Aufnahme 4 nach Einsetzen der LED auch mit einem transluzenten Material verfüllt werden.

Grundsätzlich existieren zumindest zwei Möglichkeiten, die in Figur 1 dargestellte Waage umzusetzen. Diese beiden Möglichkeiten sind in den Figuren 2 und 3 in einer Schnittansicht schematisch dargestellt.

Figur 2 zeigt eine Tragplatte 1 mit einer Deckschicht 1′ und einem Trägerkörper 1" in einer Seitenansicht, die im unteren Bereich die Elektronikaufnahme 6 aufweist. Die Elektronikaufnahme 6 ist hier als quaderförmige oder kubische Ausnehmung im unteren Bereich des Trägerkörpers 1" der Tragplatte 1 ausgebildet. Hier können die nicht dargestellte Elektronik und nicht dargestellte Energieträger in Form von Batterien oder Akkus eingesetzt werden. Oberhalb der Elektronikaufnahme 6 sind die LED-Aufnahmen 4 vorgesehen. Diese LED-Aufnahmen 4 sind als nach unten und oben offene Durchgangsbohrungen im Trägerkörper 1" ausgebildet.

Der untere Teil des Trägerkörpers 1", der die mechanische Last während des Wiegevorgangs im Wesentlichen aufnimmt, weist eine Dicke D₁ auf. Die Tiefe D₃ der Ausnehmung, die die Elektronikaufnahme 6 bildet, ist im Vergleich zur Dicke D₁ etwas geringer, so dass sich oberhalb der LED-Aufnahmen 4 noch ein Materialbereich des unteren Teils des Trägerkörpers 1ʺmit einer Dicke D₂ ergibt.

In dem oberhalb des Aufnahmebereichs mit den LED-Aufnahmen 4 liegenden Bereich des Trägerkörpers 1" mit der Dicke D₂ sind Durchgangsbohrungen zur Bildung der LED-Aufnahmen 4 vorgesehen, in die LEDs als Leuchtelemente der Matrixanzeige 3 eingebracht sind. Über eine Klebstoffschicht wird der Trägerkörper 1ʺmit einer Furnierschicht, die als obere Deckschicht 1′ dient und eine Dicke D₅ aufweist, beschichtet.

Die in Figur 2 dargestellte Ausführungsform kann sehr günstig hergestellt werden, da die Bohrungen zur Bildung der LED-Aufnahmen 4 als Durchgangsöffnungen ausgeführt sind, die sich im Herstellungsprozess leicht durch Bohren oder Stanzen herstellen lassen.

Da die LED-Aufnahmen 4 vergleichsweise klein sind, reicht eine geringe Dicke D₅ des als obere Deckschicht 1′ aufgebrachten Furniers aus. Wegen des geringen Durchmessers muss die obere Deckschicht 1′ hier so gut wie keine Kräfte aufnehmen, so dass sich ihre Funktion auf das blickdichte Abdecken der LED-Aufnahmen 4 bei inaktiver Matrixanzeige 3 bzw. bei inaktiven LEDs der Matrixanzeige 3 beschränkt. Dies wiederum macht es leicht möglich, den Gewichtswert durch Aktivieren der LEDs in den LED-Aufnahmen 4 anzuzeigen, da zum Durchscheinen eines dünnen Furniers nur eine geringe Leuchtkraft benötigt wird und das Furnier durch seine lichtstreuende Eigenschaft als "Mattscheibe" dienen kann. Die Anzahl der LED-Aufnahmen 4 und der LEDs hängt von der gewünschten Auflösung des so erzeugten Anzeigebereichs der Matrixanzeige 3 und natürlich von der Anzahl der Informationen ab, die über die Matrixanzeige 3 dargestellt werden sollen.

Figur 3 zeigt die andere grundlegende Ausgestaltung der Erfindung, bei der die Tragplatte 1 aus einem massiven Block besteht, in dessen Unterseite eine Elektronikaufnahme 6 vorgesehen ist. In die obere Decke des Trägerkörpers 1" oberhalb dieser Elektronikaufnahme 6 sind Sacklöcher als LED-Aufnahmen 4 eingebracht, in denen die LEDs der Matrixanzeige 3 (hier als solche nicht sichtbar) eingesetzt werden. Insoweit unterscheidet sich die Funktion dieser Ausgestaltung nicht von der Ausgestaltung nach Figur 2.

Im Gegensatz zur Ausgestaltung nach Figur 2 ist hier allerdings ein separates Furnier als obere Deckschicht 1′ zwar möglich, aber nicht notwendigerweise vorzusehen. Die Sacklöcher der Matrixanzeige 3 sind keine Durchgangsbohrungen, sondern lassen einen oberen Teil der Tragplatte 1 mit einer Dicke D₄ unberührt, der hier die obere Schicht anstelle einer separaten oberen Deckschicht 1′ bildet. Die Dicke D₂ oberhalb der Elektronikaufnahme 6 ist so gewählt, dass auch der durch die Sacklöcher geschwächte Bereich die auftretenden Lasten ohne Beschädigung aufnehmen kann. Die Dicke D₄ wiederum ist wie die Dicke D₅ des in Figur 2 dargestellten Furniers so gering, dass die in den Sacklöchern angeordneten LEDs diesen Bereich der Tragplatte 1 durchleuchten können, der Bereich oberhalb der Sacklöcher also transluzent ist.

Auch die in Figur 3 dargestellte Ausführungsform kann mit einem zusätzlichen Furnier oder mit einer sonstigen Beschichtung versehen sein. Die glatte Oberfläche der Tragplatte 1 erlaubt darüber hinaus das Bedrucken der Tragplatte 1 mit attraktiven Motiven. Ferner ist die spaltfreie Ausgestaltung bei Badezimmer- oder Küchenwaagen vorteilhaft, da sich hierdurch die Anreicherung von Bakterien vermeiden lässt. Schließlich ließe sich eine Küchenwaage, da diese erfindungsgemäß aus Holz gefertigt ist, auch als Schneidebrett oder isolierender Untersetzer verwenden. Um diese Funktionen zu optimieren, können an der Oberseite der Tragplatte 1 Befestigungsmittel für austauschbare Unterlagen vorgesehen werden, zum Beispiel für folienartige, fixierbare Schneidunterlagen.

Beide Ausgestaltungen, sowohl die in Figur 2 dargestellte Ausführungsform als auch die in Figur 3 dargestellte Ausgestaltung, weisen eine Elektronikaufnahme 6 auf, die groß genug ist, um die vollständige Elektronik der Waage aufzunehmen. Die hier nicht dargestellten Wägezellen 2 erstrecken sich dann in Form von drei oder vier Standfüßen von der Tragplatte 1 nach unten. Auch die Energieversorgung der Waage kann in die Tragplatte 1 bzw. die Elektronikaufnahme 6 in Form von Batterien oder Akkus integriert werden.

Sofern die Matrixanzeige 3 aufgrund der notwendigerweise eingeschränkten Auflösung nicht alle Informationen anzeigen kann, die dem Benutzer angezeigt werden sollen, kann ferner vorgesehen werden, dass die Waage über eine drahtlose Verbindung mit einer weiteren Anzeigevorrichtung, beispielsweise der eines Smartphones, korrespondieren kann. So kann beispielsweise im Fall einer Personenwaage die Matrixanzeige 3 nur das Gewicht anzeigen, während Körperanalysefunktionen über das externe Display des Smartphones angezeigt werden.

Die in den Figuren 2 und 3 dargestellten Beispiele sollen allerdings den Schutzbereich der Erfindung nicht einschränken. Die LED-Aufnahmen 4 können auch von einer Vielzahl von kleineren Einsenkungen oder Bohrungen gebildet sein, die in die Oberseite des Trägerkörpers 1" eingebracht sind und in denen dann die LEDs vorgesehen sind. Diese können, wie im Zusammenhang mit den Figuren 2 und 3 beschrieben, über eine untere Elektronikaufnahme 6 kontaktiert werden, alternativ kann die Kontaktierung auch über eingeprägte, nutförmige Kabelkanäle in der Oberseite des Trägerkörpers 1ʺoder über aufgedruckte Leiterbahnen erfolgen, die beispielsweise unterhalb der oberen Deckschicht 1" vorgesehen sind.

Schließlich können auch zusätzliche LEDs vorgesehen werden, die zum Beispiel in Ecken der Tragplatte 1 oder an deren Rändern angeordnet werden können, so dass diese Bereiche optisch kenntlich gemacht werden können. Dies bietet sich insbesondere bei Badezimmerwaagen an. Auch können sogenannte Sensor-Touch-Bereiche, als Teile der Tragplatte 1, die mit einem Näherungssensor versehen sind, über die LEDs sichtbar gemacht werden. Schließlich können diese zusätzlichen LEDs an den Rändern oder in den Sensor-Touch-Bereichen auch ihrerseits über Näherungssensoren aktiviert werden, so dass bei einem Annähern des Benutzers eine automatische Illumination erfolgt.

### Bezugszeichenliste:

- 1: Tragplatte
- 1′: Deckschicht
- 1ʺ: Trägerkörper
- 2: Wägezellen
- 3: Matrixanzeige
- 4: LED-Aufnahme
- 5: Lichtpunkt
- 6: Elektronikaufnahme

- D₁: Dicke des Trägerkörpers
- D₂: Dicke des Bereichs des oberhalb der Elektronikaufnahme
- D₃: Tiefe der Elektronikaufnahme
- D₄: Dicke der Deckschicht
- D₅: Dicke der als Deckschicht aufgebrachten Abdecklage

## Patentansprüche

1. Waage, mit einer Tragplatte (1) mit einem Trägerkörper (1") zur Aufnahme einer zu wiegenden Last, die sich über Wägezellen (2) mittelbar oder unmittelbar auf einem Untergrund abstützt, einer Deckschicht (1′), die die Oberseite des Trägerkörpers (1ʺ) teilweise oder vollflächig bedeckt, einer Elektronik zur Ermittlung des Gewichts der auf der Tragplatte (1) liegenden Last und mit einer unter der Deckschicht (1′) vorgesehenen Anzeigevorrichtung mit einer Mehrzahl von einzelnen Leuchtdioden (LEDs) zur Anzeige eines, zumindest das Gewicht der Last zumindest temporär umfassenden Anzeigeinhaltes, wobei
- die LEDs von der Elektronik zur Anzeige des Anzeigeinhaltes als Matrixanzeige (3) selektiv ansteuerbar und illuminierbar sind und die Matrixanzeige (3) den Anzeigeinhalt über die von den LEDs erzeugten Lichtpunkte (5) anzuzeigen vermag,
- die unterhalb der Oberseite der Tragplatte (1) angeordneten LEDs im aktiven, lichtabgebenden Zustand durch die Deckschicht (1′) hindurchscheinend erkennbar sind und
- die Deckschicht (1′) wenigstens in dem Bereich, unter dem die Matrixanzeige (3) angeordnet ist, angeordnet ist, und wobei
- die Matrixanzeige (3) eine Leuchtstärke und die Deckschicht (1′) eine Transluzenz aufweisen, die derart aufeinander abgestimmt sind, dass die Lichtpunkte (5) der Matrixanzeige (3) durch die Deckschicht (1′) hindurch sichtbar ist und der Anzeigeinhalt erkennbar ist, wobei
die Tragplatte (1) mehrschichtig aufgebaut ist, wobei eine obere Schicht von der Deckschicht (1′) und eine darunter angeordnete Schicht von dem ein- oder mehrschichtig ausgebildeten Trägerkörper (1ʺ) gebildet ist und der Trägerkörper (1") LED-Aufnahmen (4) in Form von Einsenkungen, Hohlräumen und/oder Durchgangsöffnungen aufweist, in den die LEDs der Matrixanzeige (3) angeordnet sind,
**dadurch gekennzeichnet, dass**
der Trägerkörper (1ʺ) und die Deckschicht (1′) aus dem gleichen Holz bestehen, wobei die Tragplatte (1) derart ausgebildet ist, dass bei inaktiver Matrixanzeige (3) ausschließlich eine Holzplatte mit dem Eindruck einer massiven Holzplatte sichtbar ist.

2. Waage nach Anspruch 1, **dadurch gekennzeichnet, dass** die Deckschicht (1′) derart ausgebildet ist, dass die LEDs im inaktiven, nicht lichtabgebenden Zustand durch die Deckschicht (1′) nicht erkennbar sind.

3. Waage nach Anspruch 2, **dadurch gekennzeichnet, dass** die LED-Aufnahmen (4) von in die Oberseite des Trägerkörpers (1ʺ) eingeformten, in Richtung der Deckschicht (1′) offenen Einsenkungen gebildet sind.

4. Waage nach Anspruch 1 oder Anspruch 2, **dadurch gekennzeichnet, dass** die LED-Aufnahmen (4) von Hohlräumen im Trägerkörper (1ʺ) oder von nach unten offenen Einsenkungen gebildet sind, wobei die oberhalb der LED-Aufnahmen (4) angeordnete Schicht des Trägerkörpers (1ʺ) derart bemessen und ausgebildet ist, dass die Lichtpunkte (5) der Matrixanzeige (3) durch diese Schicht und die Deckschicht (1′) hindurch sichtbar sind.

5. Waage nach einem der vorhergehenden Ansprüche, **dadurch gekennzeichnet, dass** die Deckschicht (1′) in Form eines dünnen Furniers ausgebildet ist und auf die Oberseite des Trägerkörpers (1ʺ) aufgeklebt oder laminiert ist.

6. Waage nach einem der Ansprüche 1 bis 4, **dadurch gekennzeichnet, dass** die Deckschicht (1′) integral mit dem Trägerkörper (1ʺ) verbunden ist.

7. Waage nach einem der vorhergehenden Ansprüche, **dadurch gekennzeichnet, dass** der Trägerkörper (1") eine Elektronikaufnahme (6) zur Aufnahme der Elektronik in Form einer einseitig, insbesondere unterseitig, offenen Aufnahmetasche oder eines Hohlraums aufweist.

8. Waage nach einem der beiden vorhergehenden Ansprüche, **dadurch gekennzeichnet, dass** die vollständige Elektronik in der Elektronikaufnahme (6) angeordnet ist und die Wägezellen (2) über eine Verkabelung mit der Elektronik verbunden sind, die ausgehend von der Elektronikaufnahme (6) zwischen dem Trägerkörper und der Deckschicht, insbesondere über Nuten in der Oberseite des Trägerkörpers, und zu den Wägezellen (2) führend Durchlässe im Trägerkörper zu den Wägezellen (2) geführt ist.

9. Waage nach einem der vorhergehenden Ansprüche, **dadurch gekennzeichnet, dass** in der Elektronik zumindest ein Referenzwert durch einen Benutzer abspeicherbar ist und die durch die Elektronik gesteuerten LEDs verschiedene Farben auszugeben vermögen, wobei die Elektronik derart ausgebildet oder steuerbar ist, dass die LEDs bei einem unter dem Referenzwert liegendem Gewicht Licht einer ersten Farbe und bei oberhalb des Referenzwerts liegendem Gewicht Licht einer anderen Farbe abzugeben vermögen.

10. Waage nach einem der vorhergehenden Ansprüche, **dadurch gekennzeichnet, dass** die durch die Elektronik gesteuerten LEDs verschiedene Farben auszugeben vermögen und bei nicht betriebsbereiter Waage die LEDs von der Elektronik derart gesteuert sind, dass sie Licht in einer ersten, insbesondere roten Farbe und bei wiegebereiter Waage Licht in einer weiteren, insbesondere grünen oder weißen Farbe abzugeben vermögen.

11. Waage nach einem der vorhergehenden Ansprüche, **dadurch gekennzeichnet, dass** der Trägerkörper (1") und die Deckschicht (1′) aus Bambus bestehen.

12. Waage nach einem der vorhergehenden Ansprüche, **dadurch gekennzeichnet, dass** die LEDs in die LED-Aufnahmen (4) eingeklebt sind und/oder der Bereich der LED-Aufnahmen (4) zwischen der Deckschicht (1′) und den LEDS mit einem transparenten Medium, insbesondere einem Kunstharz, gefüllt ist.

13. Waage nach einem der vorhergehenden Ansprüche, **dadurch gekennzeichnet, dass** die LEDs auf einer in einer Ausnehmung des Trägerkörpers (1"), insbesondere in der Elektronikaufnahme (6), angeordneten Platine angeordnet sind und sich ausgehend von der Platine in die LED-Aufnahmen erstrecken, wobei insbesondere die Elektronik der Waage ebenfalls auf der Platine angeordnet ist.

14. Waage nach einem der vorhergehenden Ansprüche, **dadurch gekennzeichnet, dass** zwischen der oberen Deckschicht (1′) und den LEDs Linsen zum Fokussieren des von den LEDs emittierten Lichtes angeordnet sind.

15. Waage nach dem vorhergehenden Anspruch, **dadurch gekennzeichnet, dass** die Linsen von einer transparenten Kunststofffolie gebildet sind, die zwischen der oberen Deckschicht (1′) und dem Trägerkörper (1ʺ) vorgesehen ist und in die die Linsen eingeprägt sind.

## Claims

1. Scale, with a support plate (1) with a support body (1") for receiving a load to be weighed, which is supported indirectly or directly on a base via load cells (2), a cover layer (1'), which partially or completely covers the upper surface of the support body (1"), electronics for determining the weight of the load lying on the support plate (1) and with a display device provided under the cover layer (1′) with a plurality of individual light-emitting diodes (LEDs) for displaying a display content at least temporarily comprising the weight of the load, wherein
- the LEDs can be selectively controlled and illuminated by the electronics for displaying the display content as a matrix display (3) and the matrix display (3) is capable of displaying the display content via the light points (5) generated by the LEDs,
- the LEDs arranged below the upper side of the support plate (1) can be seen shining through the cover layer (1′) in the active, light-emitting state, and
- the cover layer (1′) is arranged at least in the area under which the matrix display (3) is arranged, and wherein
- the matrix display (3) has a luminous intensity and the cover layer (1′) has a translucency which are matched to one another in such a way that the light points (5) of the matrix display (3) are visible through the cover layer (1') and the display content is recognizable, wherein
the support plate (1) has a multilayer structure, an upper layer being formed by the cover layer (1′) and a layer arranged thereunder being formed by the support body (1ʺ) embodied in one or more layers, and the support body (1ʺ) having LED receptacles (4) in the form of depressions, cavities and/or passage openings in which the LEDs of the matrix display (3) are arranged, **characterized in that**
the support body (1") and the cover layer (1′) consist of the same wood, the support plate (1) being embodied in such a way that, when the matrix display (3) is inactive, only a wooden plate with the impression of a solid wooden plate is visible.

2. Scale according to claim 1, **characterized in that** the cover layer (1′) is embodied in such a way that the LEDs are not visible through the cover layer (1') in the inactive, non-light-emitting state.

3. Scale according to claim 2, **characterized in that** the LED receptacles (4) are formed by depressions formed in the upper side of the support body (1") and open in the direction of the cover layer (1′).

4. Scale according to claim 1 or claim 2, **characterized in that** the LED receptacles (4) are formed by cavities in the support body (1ʺ) or by downwardly open depressions, wherein the layer of the support body (1") arranged above the LED receptacles (4) is dimensioned and embodied in such a way that the light points (5) of the matrix display (3) are visible through this layer and the cover layer (1').

5. Scale according to one of the preceding claims, **characterized in that** the cover layer (1′) is embodied in the form of a thin veneer and is glued or laminated to the upper side of the support body (1").

6. Scale according to one of the claims 1 to 4, **characterized in that** the cover layer (1′) is integrally connected to the support body (1").

7. Scale according to one of the preceding claims, **characterized in that** the support body (1") has an electronics receptacle (6) for receiving the electronics in the form of a receiving pocket or cavity open on one side, in particular on the bottom side.

8. Scale according to one of the two preceding claims, **characterized in that** the complete electronics are arranged in the electronics receptacle (6) and the load cells (2) are connected to the electronics via cabling which, starting from the electronics receptacle (6), is guided between the support body and the cover layer, in particular via grooves in the upper side of the support body, and to the load cells (2) leading through passages in the support body to the load cells (2).

9. Scale according to one of the preceding claims, **characterized in that** at least one reference value can be stored in the electronics by a user and the LEDs controlled by the electronics are capable of emitting different colors, the electronics being embodied or controllable in such a way that the LEDs are capable of emitting light of a first color when the weight is below the reference value and light of a different color when the weight is above the reference value.

10. Scale according to one of the preceding claims, **characterized in that** the LEDs controlled by the electronics are capable of emitting different colors and, when the scale is not ready for operation, the LEDs are controlled by the electronics in such a way that they are capable of emitting light in a first, in particular red color and, when the scale is ready for operation, light in a further, in particular green or white color.

11. Scale according to one of the preceding claims, **characterized in that** the support body (1") and the cover layer (1′) consist of bamboo.

12. Scale according to one of the preceding claims, **characterized in that** the LEDs are glued into the LED receptacles (4) and/or the area of the LED receptacles (4) between the cover layer (1') and the LEDs is filled with a transparent medium, in particular a synthetic resin.

13. Scale according to one of the preceding claims, **characterized in that** the LEDs are arranged on a printed circuit board arranged in a recess of the support body (1ʺ), in particular in the electronics receptacle (6), and extend from the printed circuit board into the LED receptacles, wherein in particular the electronics of the scale are also arranged on the printed circuit board.

14. Scale according to one of the preceding claims, **characterized in that** lenses for focusing the light emitted by the LEDs are arranged between the upper cover layer (1') and the LEDs.

15. Scale according to the preceding claim, **characterized in that** the lenses are formed by a transparent plastic film which is provided between the upper cover layer (1') and the carrier body (1") and in which the lenses are embossed.

## Revendications

1. Balance, avec une plaque de support (1) avec un corps de support (1") pour recevoir une charge à peser, qui s'appuie directement ou indirectement sur un support par l'intermédiaire de cellules de pesage (2), une couche de recouvrement (1'), qui recouvre partiellement ou entièrement la surface supérieure du plaque de support (1ʺ), une électronique pour déterminer le poids de la charge reposant sur la plaque de support (1) et avec un dispositif d'affichage prévu sous la couche de recouvrement (1') avec une pluralité de diodes lumineuses individuelles (DEL) pour afficher un contenu d'affichage comprenant au moins temporairement le poids de la charge,
- les DEL peuvent être commandées et illuminées de manière sélective par l'électronique pour l'affichage du contenu d'affichage sous forme d'affichage matriciel (3) et l'affichage matriciel (3) peut afficher le contenu d'affichage par l'intermédiaire des points lumineux (5) générés par les DEL, dans lequel
- les DEL disposées sous la face supérieure de la plaque de support (1) sont visibles à travers la couche de recouvrement (1') à l'état actif, émettant de la lumière et
- la couche de recouvrement (1') est disposée au moins dans la zone sous laquelle est disposé l'affichage matriciel (3), et dans lequel
- l'affichage matriciel (3) présente une intensité lumineuse et la couche de recouvrement (1') une translucidité qui sont adaptées l'une à l'autre de telle sorte que les points lumineux (5) de l'affichage matriciel (3) sont visibles à travers la couche de recouvrement (1') et que le contenu de l'affichage est reconnaissable, dans lequel
la plaque de support (1) est constituée de plusieurs couches, une couche supérieure étant formée par la couche de recouvrement (1') et une couche disposée en dessous étant formée par le corps de support (1ʺ) réalisé en une ou plusieurs couches, et le corps de support (1ʺ) présentant des logements de DEL (4) sous la forme d'enfoncements, de cavités et/ou d'ouvertures de passage, dans lesquels sont disposées les DEL de l'affichage matriciel (3), **caractérisé en ce que**
le plaque de support (1ʺ) et la couche de recouvrement (1') sont constitués du même bois, la plaque de support (1) étant conçue de telle sorte que, lorsque l'affichage matriciel (3) est inactif, seule une plaque de bois est visible, donnant l'impression d'un panneau de bois massif.

2. Balance selon la revendication 1, **caractérisée en ce que** la couche de recouvrement (1') est conçue de telle sorte que les DEL ne sont pas reconnaissables à travers la couche de recouvrement (1') dans l'état inactif, non émetteur de lumière.

3. Balance selon la revendication 2, **caractérisée en ce que** les logements de DEL (4) sont formés par des creux formés dans la face supérieure du corps de support (1") et ouverts en direction de la couche de recouvrement (1′).

4. Balance selon la revendication 1 ou la revendication 2, **caractérisée en ce que** les logements de DEL (4) sont formés par des cavités dans le corps de support (1ʺ) ou par des creux ouverts vers le bas, la couche du corps de support (1ʺ) disposée au-dessus des logements de DEL (4) étant dimensionnée et configurée de telle sorte que les points lumineux (5) de l'affichage matriciel (3) sont visibles à travers cette couche et la couche de recouvrement (1′).

5. Balance selon l'une quelconque des revendications précédentes, **caractérisée en ce que** la couche de recouvrement (1') est réalisée sous la forme d'un placage mince et est collée ou laminée sur la face supérieure du corps de support (1").

6. Balance selon l'une des revendications 1 à 4, **caractérisée en ce que** la couche de recouvrement (1′) est reliée d'un seul tenant au corps de support (1ʺ).

7. Balance selon l'une des revendications précédentes, **caractérisée en ce que** le corps de support (1ʺ) présente un logement électronique (6) destiné à recevoir l'électronique sous la forme d'une poche de couture ouverte d'un côté, en particulier du côté inférieur, ou d'un espace creux.

8. Balance selon l'une des deux revendications précédentes, **caractérisée en ce que** l'électronique complète est disposée dans le logement électronique (6) et **en ce que** les cellules de pesage (2) sont reliées à l'électronique par un câblage qui, partant du logement électronique (6), est guidé vers les cellules de pesage (2) entre le corps de support et la couche de recouvrement, en particulier par des rainures dans la face supérieure du corps de support, et vers les cellules de pesage (2) par des passages dans le corps de support.

9. Balance selon l'une des revendications précédentes, **caractérisée en ce qu'**au moins une valeur de référence peut être mémorisée par un utilisateur dans l'électronique et **en ce que** les DEL commandées par l'électronique peuvent émettre différentes couleurs, l'électronique étant conçue ou pouvant être commandée de telle sorte que les DEL peuvent émettre de la lumière d'une première couleur lorsque le poids est inférieur à la valeur de référence et de la lumière d'une autre couleur lorsque le poids est supérieur à la valeur de référence.

10. Balance selon l'une des revendications précédentes, **caractérisée en ce que** les DEL commandées par l'électronique peuvent émettre différentes couleurs et, lorsque la balance n'est pas en service, les DEL sont commandées par l'électronique de telle sorte qu'elles peuvent émettre de la lumière d'une première couleur, en particulier rouge, et, lorsque la balance est en service, de la lumière d'une autre couleur, en particulier verte ou blanche.

11. Balance selon l'une des revendications précédentes, **caractérisée en ce que** le corps de support (1") et la couche de recouvrement (1′) sont en bambou.

12. Balance selon l'une des revendications précédentes, **caractérisée en ce que** les DEL sont collées dans les logements de DEL (4) et/ou **en ce que** la zone des logements de DEL (4) entre la couche de recouvrement (1') et les DEL est remplie d'un milieu transparent, en particulier d'une résine synthétique.

13. Balance selon l'une des revendications précédentes, **caractérisée en ce que** les DEL sont disposées sur une platine placée dans un évidement du corps de support (1ʺ), en particulier dans le logement électronique (6), et s'étendent à partir de la platine dans les logements de DEL, l'électronique de la balance étant en particulier également disposée sur la platine.

14. Balance selon l'une des revendications précédentes, **caractérisée en ce que** des lentilles de focalisation de la lumière émise par les DEL sont disposées entre la couche de recouvrement supérieure (1') et les DEL.

15. Balance selon la revendication précédente, **caractérisée en ce que** les lentilles sont formées par un film plastique transparent qui est prévu entre la couche de recouvrement supérieure (1') et le corps de support (1") et dans lequel les lentilles sont imprimées.
